# EUROPEAN PATENT SPECIFICATION

(11) **EP 4 475 315 B1**
(45) Date of publication and mention of the grant of the patent: **09.09.2026**
(21) Application number: 23894808.7
(22) Date of filing: 11.10.2023
(51) Int. Cl.: H01M 50/383, H01M 50/358, H01M 50/325, H01M 50/30, H01M 50/249, H01M 50/204, H01M 50/367

(54) **BATTERY MODULE HAVING SEPARATION AND DISCHARGE UNIT AND BATTERY PACK INCLUDING THE SAME**
BATTERIEMODUL MIT TRENN- UND ENTLADEEINHEIT UND BATTERIEPACK, DAS DIESES ENTHÄLT
MODULE DE BATTERIE COMPORTANT UNE UNITÉ DE SÉPARATION ET DE DÉCHARGE ET BLOC DE BATTERIES LE COMPRENANT

(30) Priority: 21.11.2022 KR 20220156385
(43) Date of publication of application: 11.12.2024
(73) Proprietor: LG Energy Solution, Ltd., Seoul 07335 (KR)
(72) Inventor: HAN, Seung-Won, Daejeon 34122 (KR); SHIN, Jin-Kyu, Daejeon 34122 (KR); JUNG, Ki-Taek, Daejeon 34122 (KR); HEO, Sam-Hoe, Daejeon 34122 (KR); CHOI, Wan-Sup, Daejeon 34122 (KR)
(74) Representative: Plasseraud IP
(86) International application number: PCT/KR2023/015645
(87) International publication number: WO 2024/111878

(56) References cited:
- EP-A1- 3 817 086
- EP-A1- 4 468 498
- JP-A- 2009 193 880
- JP-A- 2019 129 090
- KR-A- 20120 108 677
- KR-A- 20140 002 115
- KR-A- 20220 119 988
- KR-B1- 102 220 902

## Description

### TECHNICAL FIELD

The present disclosure relates to a battery module, and more particularly, to a battery module for delaying fire spread across battery cells as long as possible in the event of fire in the battery module by separating combustion materials ejected from the battery cells during the fire into solids and gases and collecting the solids and venting the gases to the outside.

The present application claims priority to Korean Patent Application No. 10-2022-0156385 filed on November 21, 2022 in the Republic of Korea.

### BACKGROUND ART

As opposed to primary batteries that cannot be used again after they are used once, secondary batteries convert electrical energy to chemical energy and can be recharged in a semi-permanent manner.

Secondary batteries include lithium secondary batteries, nickel-cadmium (Ni-Cd) batteries, lead-acid batteries, nickel-hydrogen (Ni-MH) batteries, zinc-air batteries, alkaline manganese batteries and the like. Among them, lead-acid batteries and lithium secondary batteries are the most popular secondary batteries.

In particular, lithium secondary batteries have high energy storage density, light weight, compact size, high safety, low discharge rate and long life, and due to these advantages, they are being widely used as electric car batteries in recent years. For reference, lithium secondary batteries are generally classified into cylindrical, prismatic and pouch type according to the shape, and have a wide range of applications including electric cars as well as energy storage systems (ESS) and other electric devices.

Currently, a lithium secondary battery cell has an operating voltage of about 2.5V to 4.5V. Accordingly, to use secondary batteries as an energy source for electric vehicles, a plurality of lithium ion battery cells is connected in series and/or in parallel to form a battery module, and battery modules are connected in series and/or in parallel to form a battery pack. Patent documents EP3817086A1, EP4468498A1, JP2009193880A provide examples of such devices.

Since secondary batteries involve chemical reactions during charging and discharging, when they are used in higher temperature environments than the optimal temperature, performance degradation may occur, and in the case where thermal control to the optimal temperature fails, there are unexpected fire or explosion risks. Additionally, since the battery module has a structure in which secondary batteries are densely packed in a module housing, when a fire is triggered by heat propagation in any one secondary battery, combustion of gas ejected materials including gases and solid ejected materials may cause the fire to spread to the adjacent secondary batteries.

Accordingly, there is an urgent need for an improved structure of the battery module for delaying heat propagation by quickly separating and isolating the materials ejected from the trigger cell from the battery module or discharging the ejected materials, and specifically, separately collecting the solid ejected materials at a physical distance from the battery module to prevent heat propagation and venting the gas ejected materials to the outside to prevent contact with the outdoor air in order to suppress reaction with oxygen and thereby delay heat propagation in the battery cell or the battery module as long as possible.

### SUMMARY

### Technical Problem

To address the above-described problems, the present disclosure is directed to providing a battery module for separately collecting solid materials ejected from a trigger cell at a physical distance from the battery module to prevent heat propagation while venting gas ejected materials to the outside to prevent contact with the outdoor air in order to suppress reaction with oxygen and thereby delay heat propagation in the battery cell or the battery module as long as possible.

The technical problems to be solved by the present disclosure are not limited to the above-described problems, and these and other problems will be clearly understood by those skilled in the art from the following description.

### Technical Solution

A battery module according to the present disclosure includes a plurality of battery cells; a module case accommodating the plurality of battery cells and having at least one through-hole in at least one surface; and an ejected material separation and discharge unit disposed on an outer side of the module case such that an end communicates with the through-hole, and configured to separate materials ejected from the battery cells into solid ejected materials and vent gases including gas ejected materials and collect the solid ejected materials and vent the vent gases.

The ejected material separation and discharge unit includes a discharge pipe coupled to the outer side of the module case and placed in communication with the through-hole; a collection casing connected to the discharge pipe to collect the solid ejected materials; the collection casing having a closed inside, and a gas vent pipe branched from the discharge pipe and configured to vent the vent gases.

The gas vent pipe may include an anti-backflow member (a check valve) to prevent fluid backflow.

The ejected material separation and discharge unit may further include a vent channel in communicate with the gas vent pipe.

The vent channel may have a gas vent path to guide a gas flow in a direction perpendicular to the gas vent pipe.

The gas vent pipe may include an inclined pipe line tapered such that one end is connected to the discharge pipe and the other end is positioned higher than the end.

The through-hole may include a plurality of through-holes corresponding to a predetermined number of the battery cells, and the discharge pipe and the gas vent pipe connected to the discharge pipe may include a plurality of discharge pipes and a plurality of gas vent pipes corresponding to each of the through-holes, respectively.

The battery module may include an opening/closing door at an entrance of the collection casing to open the entrance when an internal pressure of the discharge pipe is equal to or higher than a predetermined level.

The opening/closing door may be configured to change from closed to open state by moving in only one direction.

The entrance may have a protruding step disposed around an edge of the opening/closing door.

The opening/closing door may include a hole through which the vent gases collected in the collection casing pass; and a flame barrier mesh disposed in the hole not to let flames and the solid ejected materials out.

According to another aspect of the present disclosure, there is provided a battery pack including at least one battery module.

According to still another aspect of the present disclosure, there is provided a vehicle including the battery pack.

### Advantageous Effects

According to an aspect of the present disclosure, it may be possible to separately collect solid materials ejected from the trigger cell at the physical distance from the battery module to prevent heat propagation while venting gas ejected materials to the outside to prevent contact with the outdoor air in order to suppress reaction with oxygen and thereby delay heat propagation in the battery cell or the battery module as long as possible.

Additionally, according to an aspect of the present disclosure, it may be possible to collect solid ejected materials completely separately from vent gases, thereby preventing clogging in the gas vent line including the vent channel.

### BRIEF DESCRIPTION OF THE DRAWINGS

The accompanying drawings illustrate exemplary embodiments of the present disclosure and together with the following detailed description, serve to provide a further understanding of the technical aspect of the present disclosure, and thus the present disclosure should not be construed as being limited to the drawings.
FIG. 1 is a schematic perspective view of a battery module according to an embodiment of the present disclosure.
FIG. 2 is an exploded perspective view of the main components of the battery module of FIG. 1.
FIG. 3 is an exploded perspective view of a battery module according to an embodiment of the present disclosure when viewed from bottom.
FIG. 4 is a cutaway view of an ejected material separation and discharge unit in a battery module according to an embodiment of the present disclosure.
FIG. 5 is a longitudinal cross-sectional view of an ejected material separation and discharge unit in a battery module according to an embodiment of the present disclosure when viewed from the side.
FIG. 6 is an enlarged view of an opening/closing door of FIG. 5.
FIG. 7 is a longitudinal cross-sectional view showing a front part of an ejected material separation and discharge unit in a battery module according to an embodiment of the present disclosure.
FIG. 8 is an enlarged view of an opening/closing door of FIG. 7.
FIG. 9 is a side view showing a vent path of an ejected material separation and discharge unit in a battery module according to an embodiment of the present disclosure in the event of heat propagation.
FIG. 10 is a diagram showing a front part of a vent path of an ejected material separation and discharge unit in a battery module according to an embodiment of the present disclosure in the event of heat propagation.
FIG. 11 is a diagram showing an opening/closing door of a battery module according to another embodiment of the present disclosure.

### DETAILED DESCRIPTION

Hereinafter, exemplary embodiments of the present disclosure will be described in detail with reference to the accompanying drawings. Prior to the description, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation. Therefore, the embodiments described herein and illustrations in the accompanying drawings are exemplary embodiments of the present disclosure to describe the technical aspect of the present disclosure and are not intended to be limiting, and thus it should be understood that a variety of other equivalents and modifications could have been made at the time the application was filed.

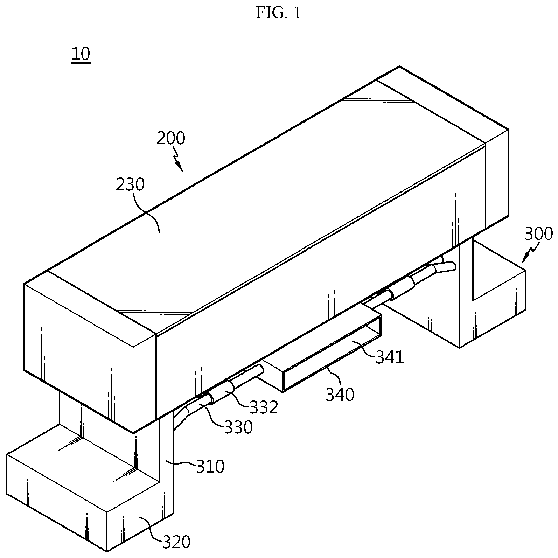

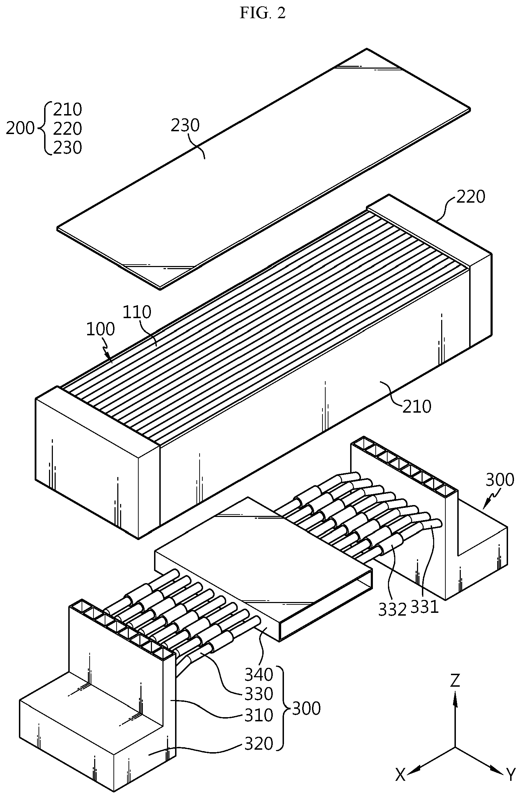

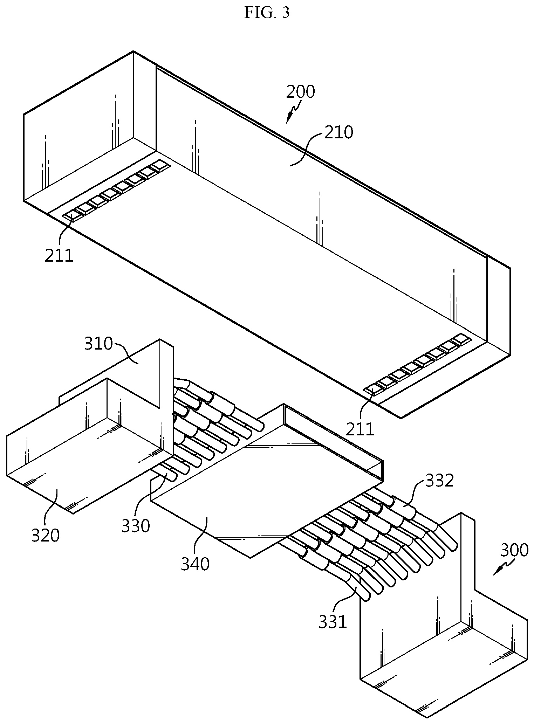

FIG. 1 is a schematic perspective view of a battery module according to an embodiment of the present disclosure, FIG. 2 is an exploded perspective view of the main components of the battery module of FIG. 1, and FIG. 3 is an exploded perspective view of the battery module according to an embodiment of the present disclosure when viewed from bottom.

Referring to FIGs. 1 to 3, the battery module 10 according to an embodiment of the present disclosure includes a plurality of battery cells 110, a module case 200 accommodating the plurality of battery cells 110, and an ejected material separation and discharge unit 300 disposed on the outer side of the module case 200.

When a fire and heat propagation occurs in a specific battery cell 110 within the battery module 10 for a certain reason, the corresponding battery cell 110 is considered as a trigger cell, and due to this event, materials are ejected from the corresponding battery cell 110. The ejected materials include solid ejected materials and vent gases including gas ejected materials. In the case where the ejected materials are not discharged quickly, the ejected materials may be transferred to the adjacent battery cells 110 due to high pressure, causing explosion and fire spread in the battery module 10. In the case where heat propagation in the corresponding battery module 10 is not controlled, the adjacent other battery modules 10 and a battery pack may be subjected to severe thermal damage, causing explosion or rapid fire spread over a wide area.

Accordingly, the battery module 10 according to the present disclosure includes the ejected material separation and discharge unit 300 having a vent path corresponding to the trigger cell to discharge the ejected materials quickly before the fire spreads to the adjacent battery cell 110, wherein the ejected materials are separated into solid ejected materials and vent gases to separately deal with them.

The pouch-type battery cell 110 includes an electrode assembly, a pouch case accommodating the electrode assembly and a pair of electrode leads that is connected to the electrode assembly, extends in the outward direction of the pouch case and acts as an electrode terminal. The pair of electrode leads extend to two ends of the battery cell 110, i.e., in the length direction (±Y direction). If necessary, the pouch-type battery cell 110 may have the electrode leads located at only one end in X axis direction, for example, an end in +X axis direction.

A cell stack 100 is a set of stacked battery cells 110. That is, as shown in FIG. 2, the cell stack 100 may be a set of pouch-type battery cells 110 stacked in a direction (Y direction) with wide surfaces standing upright. Additionally, a plurality of cell stacks 100 may form a cell assembly. The present disclosure is not limited to a particular type or shape of the battery cell 110, and a variety of battery cells 110 known at the time of filing the present disclosure may be used to form the cell stack 100 of the present disclosure.

The module case 200 is configured to protect the cell stack 100 from external impacts and may be preferably made of a material having high mechanical strength. The module case 200 according to this embodiment includes a case body 210 and a case cover 220 as shown in FIGs. 1 and 2.

The case body 210 may include a tray accommodating the cell stack 100, the tray including a lower plate, an upper plate and two side plate, and the case cover 220 may be disposed at two ends of the tray. The cell stack 100 may be seated on the case body 210 in a direction perpendicular to the length direction (X direction) of the case body 210. The case body 210 may be shaped to allow for the insertion of the cell stack 100 in a sliding or interference fit manner.

The battery module 10 including the case body 210 has no or little gap between the upper plate 230 of the case body 210 and the top of the cell stack 100 and between the lower plate of the case body 210 and the bottom of the cell stack 100, and may also have no or little gap between the two side plates of the case body 210 and two sides of the cell stack 100.

Although FIG. 2 shows the separable upper plate 230 of the module case 200, the module case 200 may be formed in the shape of a hollow rectangular pipe (i.e., the lower plate, the upper plate and the two side plates are integrated into one) having an open end portion O at two ends in the length direction to insert the cell stack 100 along the length direction (X direction), and finished with the case cover 220.

The case body 210 may have at least one through-hole 211 in the lower surface to discharge the ejected materials. In FIG. 3, the through-hole 211 is present at two end portions of the lower surface of the case body 210, and the through-hole 211 includes a plurality of through-holes 211 corresponding to a predetermined number of battery cells 110, along the direction in which the battery cells 110 are stacked. Additionally, each discharge pipe 310 is connected to each through-hole 211. The ejected material separation and discharge unit 300 will be described in detail.

Although not shown for convenience of illustration, the case cover 220 may have a hole or slit to expose the component to be exposed, such as a positive terminal and a negative terminal of the battery module 10 or a connector.

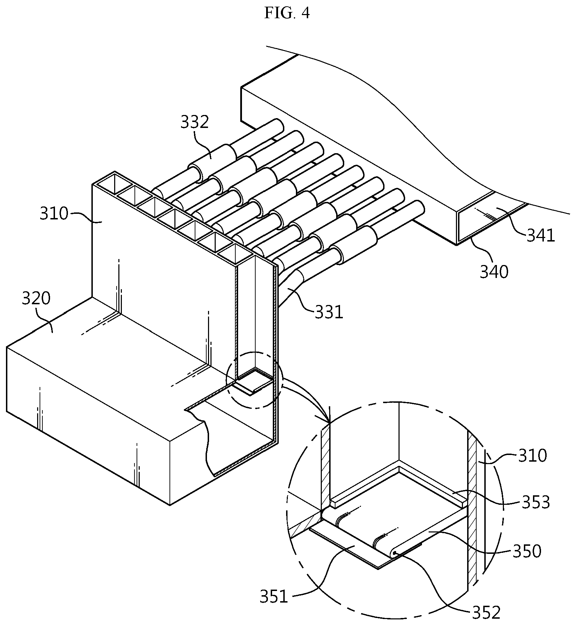

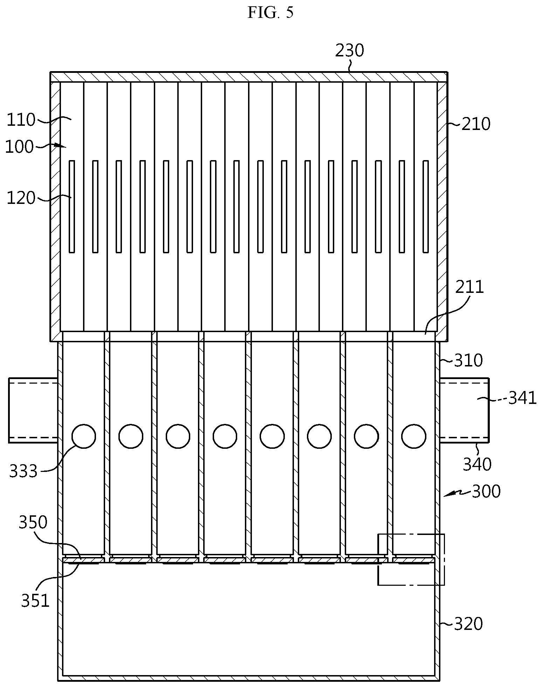

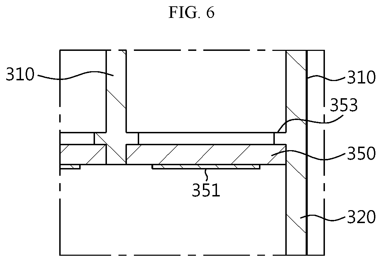

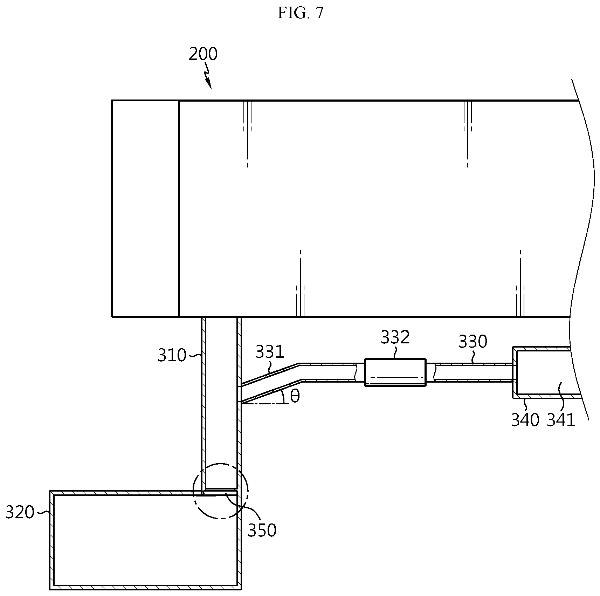

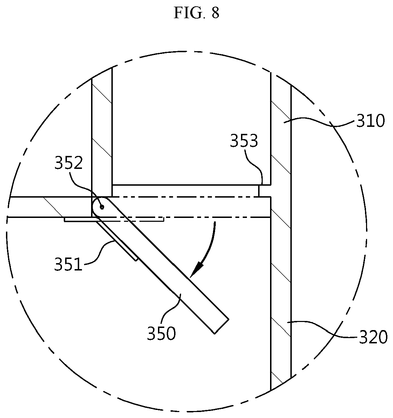

FIG. 4 is a cutaway view of the ejected material separation and discharge unit in the battery module according to an embodiment of the present disclosure, FIG. 5 is a longitudinal cross-sectional view of the ejected material separation and discharge unit in the battery module according to an embodiment of the present disclosure when viewed from the side, FIG. 6 is an enlarged view of an opening/closing door of FIG. 5, FIG. 7 is a longitudinal cross-sectional view showing the front part of the ejected material separation and discharge unit in the battery module according to an embodiment of the present disclosure, and FIG. 8 is an enlarged view of the opening/closing door of FIG. 7.

As described above, when a fire is triggered in any one battery cell 110 of the battery module for a certain reason, gas materials including vent gases and solid materials are ejected from the trigger cell. The ignition of the ejected materials causes heat propagation and fire spread to the adjacent secondary batteries. Accordingly, it is necessary to quickly force the ejected materials from the trigger cell out a predetermined distance apart from the battery module to remove the cause of the fire spread.

Accordingly, in an embodiment of the present disclosure, the ejected material separation and discharge unit 300 is disposed on the outer side (the lower side) of the module case 200. The ejected material separation and discharge unit 300 is configured to separate materials ejected from the battery cells 110 into solid ejected materials and vent gases including gas ejected materials and collect the solid ejected materials and vent the gases to the outside.

The ejected material separation and discharge unit 300 is a type of pipe line and equipment disposed on bottom of the module case 200 and placed in communication with the through-holes 211 to discharge the ejected materials quickly and rapidly.

As shown in FIGs. 1 to 8, the ejected material separation and discharge unit 300 includes a discharge pipe 310 coupled to the outer side of the module case 200 and placed in communication with the through-holes 211, a collection casing 320 connected to the discharge pipe 310 to collect the solid ejected materials and a gas vent pipe 330 branched from the discharge pipe 310 to vent the gases.

Referring primarily to FIG. 4, the discharge pipe 310 is disposed in the vertical (top-bottom) direction (Z direction) from the lower surface of the module case 200 and has one end connected to the through-holes 211 and the other end connected to the collection casing 320. Additionally, the discharge pipe 310 includes a plurality of discharge pipes 310 corresponding to the plurality of through-holes 211. Since each discharge pipe 310 is provided for each corresponding through-hole 211, in the event of fire in any battery cell 110, it may be possible to force the ejected materials out the module case 200 quickly through the through-hole 211 corresponding to the corresponding battery cell 110 and minimize the influence on the adjacent other battery cells 110. Although this embodiment shows eight discharge pipes 310 corresponding to eight through-holes 211, the number of through-holes 211 and discharge pipes 310 may vary depending on the number of battery cells 110 received in the battery module.

The collection casing 320 is connected to the other end of the discharge pipe 310 and have a closed inside. The collection casing 320 may collect the solid ejected materials among the ejected materials flowing along the discharge pipe 310. Although not shown in the drawings, an extra discharge pipe 310 for the solid ejected materials may be connected to the collection casing 320 to discharge the collected solid ejected materials.

The opening/closing door 350 is disposed at an entrance of the collection casing 320 at the boundary between the collection casing 320 and the discharge pipe 310. The opening/closing door 350 is configured to open the entrance when the internal pressure of the discharge pipe 310 is equal to or higher than a predetermined level. Additionally, referring to FIGs. 4, 6 and 8, the opening/closing door 350 may be configured to change from the closed state to the open state by moving in only one direction. To this end, the entrance may have a protruding step 353 disposed around the edge of the opening/closing door 350. The opening/closing door 350 is closed when it rotates in a direction and contacts the protruding step 353. Additionally, when the protruding step 353 is made of a rubber or elastic material, a sealing function may be performed with improved sealability of the opening/closing door 350.

The opening/closing door 350 may be configured to be open and closed using a hinge portion, and have a leaf spring 351 (or a coil spring) near the hinge portion. In this instance, the opening/closing door 350 may be configured to elastically transform when it changes from closed to open state. Accordingly, when a force by the internal pressure of the discharge pipe 310 is greater than a force by the leaf spring 351, the opening/closing door 350 may be in open state, and when the force by the internal pressure of the discharge pipe 310 is smaller than the force by the leaf spring 351, the opening/closing door 350 may be in closed state. The leaf spring 351 may be replaced with a coil spring, a torsion spring and the like.

The opening/closing door 350 while in the closed state may be configured to prevent the solid ejected materials collected in the collection casing 320 from flowing back to the discharge pipe 310 or entering the module case 200 through the discharge pipe 310.

Since the solid ejected materials are collected completely separately from the vent gases, it may be possible to prevent cogging in the gas vent line including the vent channel.

The gas vent pipe 330 may include a plurality of gas vent pipes 330, each gas vent pipe corresponding to each through-hole 211. Additionally, the gas vent pipe 330 may be connected for each discharge pipe 310. The gas vent pipe 330 may be in the shape of a pipe line running in the horizontal direction. The gas vent pipe 330 may include an inclined pipe line 331 at the side connected to the discharge pipe 310, and the inclined pipe line 331 may be tapered such that an end is positioned higher than the opposite end (a gas vent hole 333). The inclined pipe line 331 plays a role in preventing the solid ejected materials from entering the gas vent pipe 330 while the ejected materials are flowing along the discharge pipe 310. The inclined pipe line 331 has an inclination angle θ to allow some solid ejected materials entering through the gas vent hole 333 to go back to the discharge pipe 310. On the other hand, the gas ejected materials such as the vent gases may be vented along the gas vent pipe 330.

The gas vent pipe 330 may include an anti-backflow member 332 (a check valve) to prevent fluid backflow. The anti-backflow member may be, for example, a check valve that permits a fluid flow in only one direction. The anti-backflow member 332 plays a role in guiding a gas flow in a direction, and prevents gas backflow and keeps the outdoor air (oxygen) from entering the gas vent pipe 330, thereby preventing a vent gas-induced fire in the battery module 10.

The ejected material separation and discharge unit 300 may further include a vent channel 340 that communicates with the gas vent pipe 330. The vent channel 340 may have a gas vent path 341 to guide a gas flow in a direction perpendicular to the gas vent pipe 330. Accordingly, the vent gases flowing along the gas vent pipe 330 may get together at the gas vent path 341 and be then vented to the outside. Although the vent channel 340 of a size corresponding to one battery module 10 is shown, the gas vent path 341 and the vent channel 340 may be extended and continuously arranged corresponding to the plurality of battery modules 10.

By this exemplary configuration, it may be possible to separately collect the solid materials ejected from the trigger cell at the physical distance from the battery module 10, thereby preventing heat propagation, and vent the gases to the outside to prevent contact with the outdoor air in order to suppress reaction with oxygen, thereby delaying heat propagation in the battery cell 110 or the battery module 10 as long as possible.

Additionally, by this exemplary configuration, it may be possible to collect the solid ejected materials completely separately from the vent gases, thereby preventing clogging in the gas vent line including the vent channel.

Additionally, since the solid materials ejected from the trigger cell are separately collected at the physical distance from the battery module 10, the ignition position may be spaced the predetermined distance apart from the battery module, thereby slowing down heat propagation and propagation.

Additionally, since the battery cells 110 adjacent to the trigger cell is less thermally damaged, it may be possible to delay the time required for all the battery cells 110 and the battery module 10 to burn or explode, thereby allowing a user to recognize the fire in the battery module 10 before the fire spreads and have a sufficient time for evacuation in a safer situation.

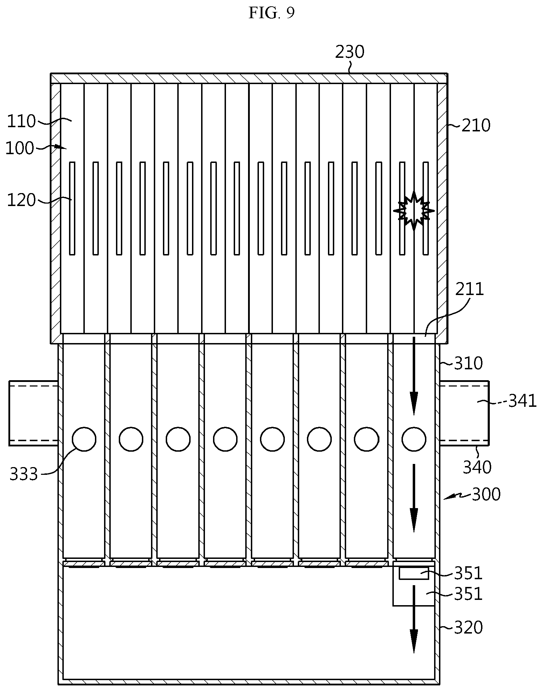

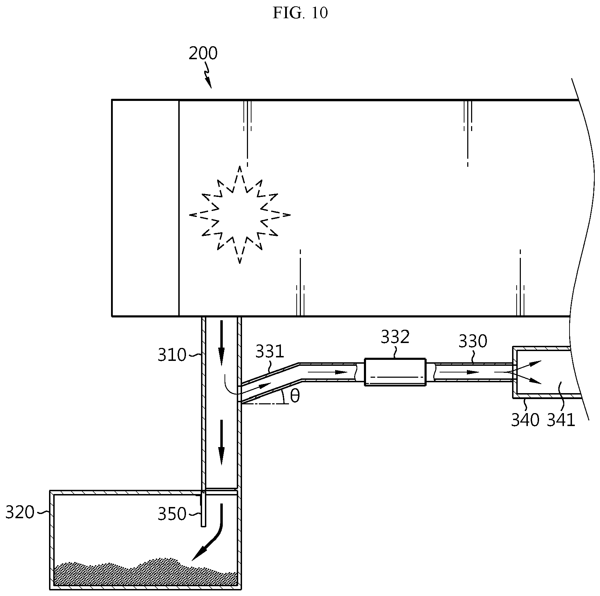

FIG. 9 is a side view showing the vent path of the ejected material separation and discharge unit 300 in the battery module 10 according to an embodiment of the present disclosure in the event of heat propagation, and FIG. 10 is a diagram showing the front part of the vent path of the ejected material separation and discharge unit 300 in the battery module 10 according to an embodiment of the present disclosure in the event of heat propagation.

Hereinafter, the venting process of venting gases to the outside according to this embodiment will be described in detail with reference to FIGS. 1 to 10.

First, when a fire is triggered by any one battery cell 110 of the battery module 10 for a certain reason, ejected materials including vent gases and solid ejected materials are produced.

Subsequently, the ejected materials quickly flow to the ejected material separation and discharge unit 300 through the through-holes 211. The solid ejected materials flow down along the discharge pipe 310 and when the internal pressure of the discharge pipe 310 is equal to or higher than the predetermined level, the opening/closing door 350 is open to collect the solid ejected materials in the collection casing 320. When some of the solid ejected materials enter through the gas vent hole 333, the inclined pipe line 331 (the inclination angle of θ) may screen them to make them go back to the discharge pipe 310 and eventually be collected in the collection casing 320.

Accordingly, it is possible to collect the solid ejected materials completely separately from the vent gases, thereby preventing clogging in the gas vent line including the vent channel.

Concurrently, the vent gases including the gas ejected materials flow out through the gas vent hole 333 into the gas vent path 341 of the vent channel 340 along the gas vent pipe 330. In this instance, the gas flow is formed in only one direction by the anti-backflow member 332 (the check valve) to prevent contact with oxygen in the outdoor air and thereby avoid ignition.

By performing the aforementioned steps, it may be possible to separately collect the solid materials ejected from the trigger cell at the physical distance from the battery module 10, thereby preventing heat propagation and vent the gas ejected materials to the outside to prevent contact with the outdoor air in order to suppress reaction with oxygen, thereby delaying heat propagation in the battery cell 110 or the battery module 10 as long as possible.

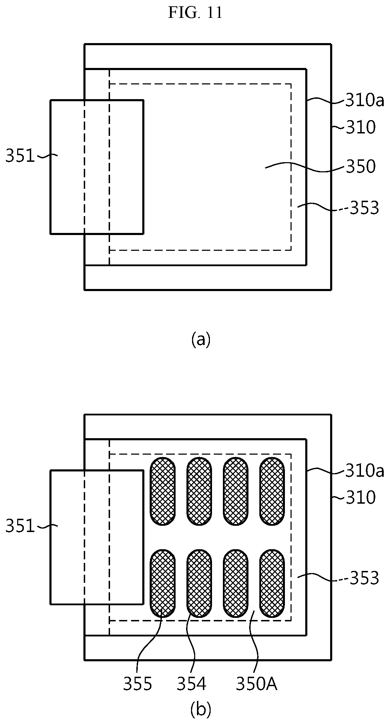

Subsequently, other embodiments of the battery module 10 of the present disclosure will be briefly described with reference to FIG11.

FIG. 11 is a diagram showing the opening/closing door of the battery module according to another embodiment of the present disclosure.

The same reference numerals as the previous drawings indicate the same elements, and redundant description of the same elements is omitted and difference(s) between this embodiment and the previous embodiment will be described.

When compared with the previous embodiment, the battery module 10 according to another embodiment of the present disclosure may further include a hole 354 and a flame barrier mesh 355 in the opening/closing door 350A as shown in (b) of FIG. 11 and the remaining configuration is the same.

The first embodiment does not have any hole or passage means in the opening/closing door 350 as shown in (a) of FIG. 11, while the opening/closing door 350A of this embodiment may have a plurality of holes 354 in the plate surface to vent the gases collected in the collection casing 320 as shown in (b) of FIG. 11.

That is, referring primarily to FIG. 11, the opening/closing door 350 may have the plurality of holes 354 in the collection casing 320.

Additionally, the flame barrier mesh 355 is disposed in the hole 354 to block the hole 354 not to let flames and the solid ejected materials out. The flame barrier mesh 355 may have a mesh structure, and may be made of a metal that does not easily melt by heat. Accordingly, it may be possible to prevent the solid ejected materials, flames, high temperature particles received in the collection casing 320 from going back to the discharge pipe 310 and selectively allow only the gases collected in the collection casing 320 to go to the discharge pipe 310.

Accordingly, it may be possible to separately collect the solid materials ejected from the trigger cell at the physical distance from the battery module 10, thereby preventing heat propagation and vent the gas ejected materials to the outside to prevent contact with the outdoor air in order to suppress reaction with oxygen, thereby delaying heat propagation of the battery cell 110 or the battery module 10 as long as possible.

Meanwhile, a battery pack (not shown) according to the present disclosure may include at least one battery module 10. The battery pack according to the present disclosure may further include a pack case accommodating the above-described components and a master Battery Management System (BMS) for controlling the charge and discharge of all of the at least one battery module 10, a current sensor, a fuse and the like.

The battery pack according to the present disclosure may be applied to an energy storage device or an electric scooter, or a vehicle such as an electric vehicle or a hybrid electric vehicle.

While the present disclosure has been hereinabove described with regard to a limited number of embodiments and drawings, the present disclosure is not limited thereto and it is defined by the appended claims.

The terms indicating directions such as upper, lower, left, right, front and rear are used for convenience of description, but it is obvious to those skilled in the art that the terms may change depending on the position of the stated element or an observer.

## Claims

1. A battery module (10), comprising:
a plurality of battery cells (110);
a module case (200) accommodating the plurality of battery cells (110) and having at least one through-hole (211) in at least one surface; and
an ejected material separation and discharge unit (300) disposed on an outer side of the module case (200) such that an end communicates with the through-hole (211), and configured to separate materials ejected from the battery cells (110) into solid ejected materials and vent gases including gas ejected materials and collect the solid ejected materials and vent the vent gases,
wherein the ejected material separation and discharge unit (300) includes:
a discharge pipe (310) coupled to the outer side of the module case (200) and placed in communication with the through-hole (211);
a collection casing (320) connected to the discharge pipe (310) to collect the solid ejected materials;
and
a gas vent pipe (330) branched from the discharge pipe (310) and configured to vent the vent gases,
**characterized in that** the collection casing (320) has a closed inside.

2. The battery module (10) according to claim 1, wherein the gas vent pipe (330) includes an anti-backflow member (332) (a check valve) to prevent fluid backflow.

3. The battery module (10) according to claim 1, wherein the ejected material separation and discharge unit (300) further includes a vent channel (340) in communicate with the gas vent pipe.

4. The battery module (10) according to claim 3, wherein the vent channel has a gas vent path (341) to guide a gas flow in a direction perpendicular to the gas vent pipe.

5. The battery module (10) according to claim 1, wherein the gas vent pipe includes an inclined pipe line (331) tapered such that a first end of the inclined pipe line (331) is connected to the discharge pipe (310) and a second end of the inclined pipe line (331) is connected to the vent channel (340).

6. The battery module (10) according to claim 1, wherein the through-hole (211) includes a plurality of through-holes corresponding to a predetermined number of the battery cells (110), and
wherein the discharge pipe (310) and the gas vent pipe connected to the discharge pipe (310) include a plurality of discharge pipes and a plurality of gas vent pipes corresponding to each of the through-holes, respectively.

7. The battery module (10) according to claim 1, wherein an ejected material separation and discharge unit (300) comprises an opening/closing door (350) at an entrance of the collection casing to open the entrance when a force by an internal pressure of the discharge pipe (310) is equal to or higher than a predetermined level.

8. The battery module (10) according to claim 7, wherein the opening/closing door (350) is configured to change from closed to open state by moving in only one direction.

9. The battery module (10) according to claim 8, wherein the entrance has a protruding step disposed around an edge of the opening/closing door (350).

10. The battery module (10) according to claim 7, wherein the opening/closing door (350) includes:
a hole (354) through which the vent gases collected in the collection casing pass; and
a flame barrier mesh (355) made of metal and having a mesh structure, the flame barrier mesh (355) being disposed in the hole (354) not to let flames and the solid ejected materials out.

11. A battery pack comprising the battery module (10) according to any one of claims 1 to 10.

12. A vehicle comprising the battery pack according to claim 11.

## Patentansprüche

1. Batteriemodul (10), umfassend:
eine Vielzahl von Batteriezellen (110);
ein Modulgehäuse (200), das die Vielzahl von Batteriezellen (110) aufnimmt und mindestens ein Durchgangsloch (211) in mindestens einer Oberfläche aufweist; und
eine Trenn- und Auslasseinheit für ausgestoßenes Material (300), die an einer Außenseite des Modulgehäuses (200) angeordnet ist, so dass ein Ende mit dem Durchgangsloch (211) in Verbindung steht, und die konfiguriert ist, um von den Batteriezellen (110) ausgestoßene Materialien in feste ausgestoßene Materialien und Entlüftungsgase, einschließlich gasförmiger ausgestoßener Materialien, zu trennen und die festen ausgestoßenen Materialien zu sammeln und die Entlüftungsgase zu entlüften,
wobei die Trenn- und Auslasseinheit für ausgestoßenes Material (300) Folgendes enthält:
ein Auslassrohr (310), das mit der Außenseite des Modulgehäuses (200) gekoppelt und in Verbindung mit dem Durchgangsloch (211) platziert ist;
ein Sammelgehäuse (320), das mit dem Auslassrohr (310) verbunden ist, um die festen ausgestoßenen Materialien zu sammeln;
und
ein Gasentlüftungsrohr (330), das von dem Auslassrohr (310) abzweigt und konfiguriert ist, um die Entlüftungsgase zu entlüften,
**dadurch gekennzeichnet, dass** das Sammelgehäuse (320) ein geschlossenes Inneres aufweist.

2. Batteriemodul (10) nach Anspruch 1, wobei das Gasentlüftungsrohr (330) ein Rückflussverhinderungselement (332) (ein Rückschlagventil) enthält, um einen Fluidrückfluss zu verhindern.

3. Batteriemodul (10) nach Anspruch 1, wobei die Trenn- und Auslasseinheit für ausgestoßenes Material (300) ferner einen Entlüftungskanal (340) in Verbindung mit dem Gasentlüftungsrohr enthält.

4. Batteriemodul (10) nach Anspruch 3, wobei der Entlüftungskanal einen Gasentlüftungspfad (341) aufweist, um einen Gasstrom in einer Richtung senkrecht zum Gasentlüftungsrohr zu leiten.

5. Batteriemodul (10) nach Anspruch 1, wobei das Gasentlüftungsrohr eine geneigte Rohrleitung (331) enthält, die sich so verjüngt, dass ein erstes Ende der geneigten Rohrleitung (331) mit dem Auslassrohr (310) verbunden ist und ein zweites Ende der geneigten Rohrleitung (331) mit dem Entlüftungskanal (340) verbunden ist.

6. Batteriemodul (10) nach Anspruch 1, wobei das Durchgangsloch (211) eine Vielzahl von Durchgangslöchern enthält, die einer vorbestimmten Anzahl der Batteriezellen (110) entsprechen, und
wobei das Auslassrohr (310) und das mit dem Auslassrohr (310) verbundene Gasentlüftungsrohr eine Vielzahl von Auslassrohren und eine Vielzahl von Gasentlüftungsrohren enthalten, die jeweils den Durchgangslöchern entsprechen.

7. Batteriemodul (10) nach Anspruch 1, wobei eine Trenn- und Auslasseinheit für ausgestoßenes Material (300) eine Öffnungs-/Schließklappe (350) an einem Eingang des Sammelgehäuses umfasst, um den Eingang zu öffnen, wenn eine Kraft durch einen Innendruck des Auslassrohrs (310) gleich oder höher als ein vorbestimmtes Niveau ist.

8. Batteriemodul (10) nach Anspruch 7, wobei die Öffnungs-/Schließklappe (350) konfiguriert ist, um durch Bewegung in nur einer Richtung vom geschlossenen in den offenen Zustand zu wechseln.

9. Batteriemodul (10) nach Anspruch 8, wobei der Eingang eine vorstehende Stufe aufweist, die um einen Rand der Öffnungs-/Schließklappe (350) angeordnet ist.

10. Batteriemodul (10) nach Anspruch 7, wobei die Öffnungs-/Schließklappe (350) Folgendes enthält:
ein Loch (354), durch das die im Sammelgehäuse gesammelten Entlüftungsgase strömen; und
ein Flammensperrgitter (355) aus Metall mit einer Gitterstruktur, wobei das Flammensperrgitter (355) in dem Loch (354) angeordnet ist, um Flammen und die festen ausgestoßenen Materialien nicht austreten zu lassen.

11. Batteriepack, das das Batteriemodul (10) nach einem der Ansprüche 1 bis 10 umfasst.

12. Fahrzeug, das das Batteriepack nach Anspruch 11 umfasst.

## Revendications

1. Un module de batterie (10), comprenant :
une pluralité de cellules de batterie (110) ;
un boîtier de module (200) logeant la pluralité de cellules de batterie (110) et ayant au moins un trou traversant (211) dans au moins une surface ; et
une unité de séparation et d'évacuation de matière éjectée (300) disposée sur un côté extérieur du boîtier de module (200) de telle sorte qu'une extrémité communique avec le trou traversant (211), et configurée pour séparer les matières éjectées des cellules de batterie (110) en matières solides éjectées et en gaz d'évent incluant des matières gazeuses éjectées et pour collecter les matières solides éjectées et évacuer les gaz d'évent,
dans lequel l'unité de séparation et d'évacuation de matière éjectée (300) inclut :
un tuyau d'évacuation (310) couplé au côté extérieur du boîtier de module (200) et placé en communication avec le trou traversant (211) ;
un boîtier de collecte (320) connecté au tuyau d'évacuation (310) pour collecter les matières solides éjectées ;
et
un tuyau d'évent de gaz (330) raccordé au tuyau d'évacuation (310) et configuré pour évacuer les gaz d'évent,
**caractérisé en ce que** le boîtier de collecte (320) a un intérieur fermé.

2. Le module de batterie (10) selon la revendication 1, dans lequel le tuyau d'évent de gaz (330) inclut un élément anti-retour (332) (un clapet anti-retour) pour empêcher un retour de fluide.

3. Le module de batterie (10) selon la revendication 1, dans lequel l'unité de séparation et d'évacuation de matière éjectée (300) inclut en outre un canal d'évent (340) en communication avec le tuyau d'évent de gaz.

4. Le module de batterie (10) selon la revendication 3, dans lequel le canal d'évent a un trajet d'évent de gaz (341) pour guider un écoulement de gaz dans une direction perpendiculaire au tuyau d'évent de gaz.

5. Le module de batterie (10) selon la revendication 1, dans lequel le tuyau d'évent de gaz inclut une conduite inclinée (331) conique de telle sorte qu'une première extrémité de la conduite inclinée (331) est connectée au tuyau d'évacuation (310) et une seconde extrémité de la conduite inclinée (331) est connectée au canal d'évent (340).

6. Le module de batterie (10) selon la revendication 1, dans lequel le trou traversant (211) inclut une pluralité de trous traversants correspondant à un nombre prédéterminé de cellules de batterie (110), et
dans lequel le tuyau d'évacuation (310) et le tuyau d'évent de gaz connectés au tuyau d'évacuation (310) incluent une pluralité de tuyaux d'évacuation et une pluralité de tuyaux d'évent de gaz correspondant à chacun des trous traversants, respectivement.

7. Le module de batterie (10) selon la revendication 1, dans lequel une unité de séparation et d'évacuation de matière éjectée (300) comprend une porte d'ouverture/fermeture (350) au niveau d'une entrée du boîtier de collecte pour ouvrir l'entrée lorsqu'une force due à une pression interne du tuyau d'évacuation (310) est égale ou supérieure à un niveau prédéterminé.

8. Le module de batterie (10) selon la revendication 7, dans lequel la porte d'ouverture/fermeture (350) est configurée pour passer de l'état fermé à l'état ouvert en se déplaçant dans une seule direction.

9. Le module de batterie (10) selon la revendication 8, dans lequel l'entrée présente une marche en saillie disposée autour d'un bord de la porte d'ouverture/fermeture (350).

10. Le module de batterie (10) selon la revendication 7, dans lequel la porte d'ouverture/fermeture (350) inclut :
un trou (354) à travers lequel passent les gaz d'évent collectés dans le boîtier de collecte ; et
un treillis pare-flammes (355) fait de métal et ayant une structure en treillis, le treillis pare-flammes (355) étant disposé dans le trou (354) pour ne pas laisser sortir les flammes et les matières solides éjectées.

11. Un bloc-batterie comprenant le module de batterie (10) selon l'une quelconque des revendications 1 à 10.

12. Un véhicule comprenant le bloc-batterie selon la revendication 11.
